# EUROPEAN PATENT SPECIFICATION

(11) **EP 0 619 702 B1**
(45) Date of publication and mention of the grant of the patent: **27.09.2000**
(21) Application number: 94901058.1
(22) Date of filing: 01.11.1993
(51) Int. Cl.: A01K 1/12, A01K 1/00

(54) **A CONSTRUCTION FOR AUTOMATICALLY MILKING ANIMALS**
KONSTRUKTION ZUM AUTOMATISCHEN MELKEN VON TIEREN
INSTALLATION DE TRAITE AUTOMATIQUE D'ANIMAUX

(30) Priority: 02.11.1992 NL 9201902; 18.02.1993 NL 9300307
(43) Date of publication of application: 19.10.1994
(60) Divisional application: 99204457.8
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: NL9300223
(87) International publication number: WO9409616

(56) References cited:
- EP-A- 0 091 892
- EP-A- 0 189 954
- EP-A- 0 360 354
- EP-A- 0 389 013
- EP-A- 0 432 148
- EP-A- 0 514 765
- EP-A- 0 582 350
- FR-A- 2 598 236
- GB-A- 1 158 016
- GB-A- 2 218 888
- US-A- 4 445 460

## Description

The present invention relates to a construction for automatically milking animals, such as cows, comprising a milking box with a milking robot and at least two enclosed areas where the animals can freely move about, which construction includes a system of doors, gates or suchlike means which open in one direction for defining the path and the direction in which the animals can walk to and from the milking box, and in that the areas are connected successively to each other while the milking box is arranged between two successive areas, and the system of doors, gates or suchlike means are arranged in such a way that an animal can walk from a first area of the successive areas to a second area of the successive areas via the milking box.

A construction of the above defined type is known from EP-A-0 432 148.

In this construction two groups of cows are accommodated in a shed, which is divided in two areas. The shed furthermore comprises a milking box with a milking robot, which the animals of both groups can enter via a system of doors. Once the animals are milked, they can leave the milking box and return to the area in which they were accommodated. The above mentioned construction has the disadvantage that, due to the fact that the animals return in their area, they can easily return to the entrance door of the milking box, which is in direct contact with said area. The latter means that they block the entrance door for the animals to be milked.

EP-A-0 582 350, which is an Article 54(3) document except for Ireland, relates to a construction in which the animals can go from one enclosed area to another enclosed area via the milking box in one direction only. Since the animals can only go one way, it is not possible for animals to return to the milking box if they feel the need to be milked again.

The invention has for its object to provide a construction of the above defined type in which the animals, after being milked, cannot easily return to the milking robot entrance, but still have the opportunity of visiting the milking robot.

According to the invention this is achieved in that the animal can walk from said second area via at least one other successively connected enclosed area, to said first area. In this way the animal that has been previously milked cannot directly return to the milking robot since it has to pass at least one other successively connected area to return to said first area. Dual doors, gates or suchlike means in accordance with the invention comprise means via which animals can go from one area, e.g. a shed or a pasture, to another shed or pasture. The expression "which open in one direction" refers to the direction in which the animals can pass through such openings.

When animals are being automatically milked, it is important that between the consecutive milkings the animals feel comfortable. Hence, the invention is preferably characterized in that an area comprises a pasture and a shed with cubicles for the animals, the shed furthermore being arranged such that the animals can optionally stay in a pasture adjacent to the shed or in the cubicles. By providing a system of doors or gates which open in one direction, it is realized that the animals can walk through the shed and the pasture in one direction only. It is also achieved that the shed, and optionally the pasture, is provided with dual doors or gates which open in one and the same direction. Thus it becomes possible to check the progress of the animals through the shed and optionally the pasture to the milking robot, for example by counting the number of animals present in such an area at a given moment. So as to effect in addition a correct progression through the shed and optionally the pasture, the invention is preferably also characterised in that a radio system with aerial and loudspeaker is attached to the animal, which system operates in such a manner that, if there are too many animals in a location, animals are encouraged by sounds from the loudspeaker to move in one direction through the shed and optionally a pasture contiguous thereto to the milking robot.

For a better understanding of the invention and to show how the same may be carried into effect, reference will now be made, by way of example, to the accompanying drawings, in which:
Figure 1 shows a lay-out of a shed with a milking box, it being possible to pass through the shed and the milking box in one direction only;
Figure 2 shows a lay-out of a shed as shown in Figure 1 and a pasture contiguous thereto, it being possible to pass through the shed with the milking box and the pasture in one direction only;
Figure 3 shows a door which can open in one direction only, such as it is present in the shed, to ensure that the shed and the milking box can only be passed through in one direction;
Figure 4 shows a collar which, in addition to a cow identification system, is also provided with a radio system for encouraging the animal to pass through the shed and optionally the pasture on its way to the milking robot;
Figure 5 is a plan view of a milking box formed by two compartments, a milking robot being arranged such as to be pivotal between the two compartments;
Figure 6 is a side view of the milking robot in Figure 5;
Figure 7 is a rear view of a portion of the milking robot in Figure 5;
Figure 8 is a plan view of another embodiment of a milking box formed by two compartments, a milking robot and a cleaning member being arranged such as to be pivotal between the two compartments;
Figure 9 is a side view of a portion of the milking robot in Figure 8;
Figure 10 is a rear view of the milking robot as well as of the cleaning member arranged visibly in front thereof;
Figure 11 is a front view of the cleaning member in Figure 8;
Figure 12 is a longitudinal section through the cleaning elements of the cleaning member, and
Figure 13 is a cross-sectional view of that portion of the cleaning member that is shown in Figure 12.

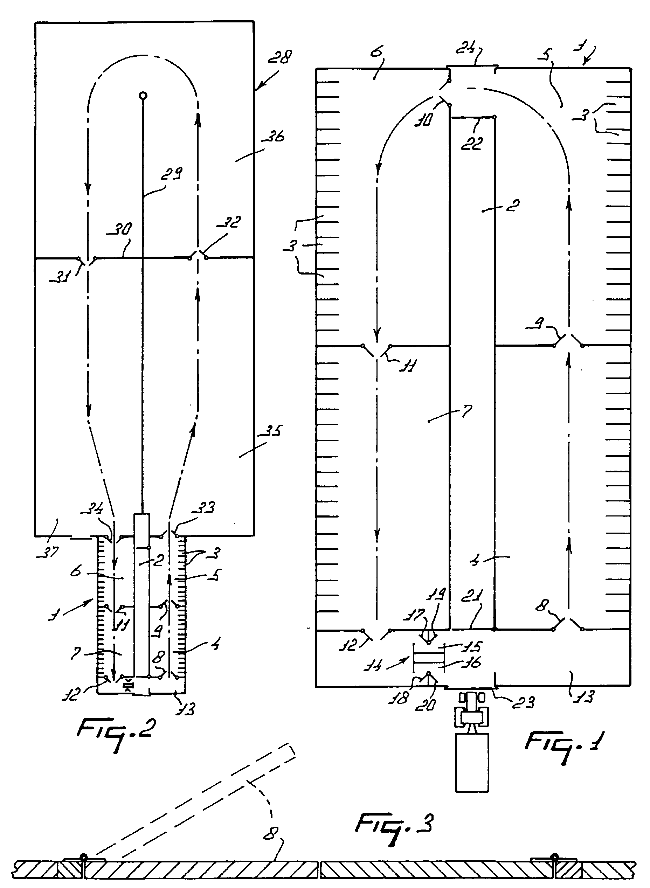

Figure 1 shows a shed, particularly a loose housing 1, in which cows can move freely and in the longitudinal direction whereof a feeding area 2 is provided. Cubicles 3 are arranged on both sides of this feeding area 2 through substantially the overall length of the shed 1 along the inner side of the outer wall. The shed, which is split into two parts by the feeding area 2, is in the present embodiment divided in its totality into four areas 4, 5, 6 and 7. The animals present in the shed can reach these areas via doors or gates 8, 9, 10, 11 and 12 which open in one direction only. Figure 3 shows an embodiment of these doors. At one of the short sides of the shed there is an area 13, in which a dual milking box 14, i.e. a milking box formed by two compartments 15 and 16, is set-up. The compartments 15 and 16 of this milking box 14 can be entered through doors 17 and 18, whilst these compartments can be left through doors 19 and 20. The system of doors opening in one only direction defines the path and the direction in which the animals can walk through the shed and the milking box. Thus, the animals can proceed from the area 4 through the doors 9 to the area 5, from there through the doors 10 to the area 6, through the doors 11 to the area 7 and through the doors 12 to the area 13, respectively, where the milking box 14 is located, and from the area 13 through the doors 8 to the area 4 again. The animals can push the doors 8, 9, 10, 11 and 12 open in one direction. In addition, it is possible to open the doors under the control of a computer, to keep them open during a given period of time, or to close them; this will be described in greater detail hereinafter. In addition, the shed has doors 21 and 22 and, in the outer wall, doors 23 and 24, through which persons can reach the feeding area 2, it being prevented that at that moment animals might enter this feeding area 2 from the area 5 or from the area 13. Through the doors 23 and 21 or through the doors 24 and 22 fodder can be brought into the feeding area 2, optionally with the aid of a tractor. Gutters or troughs for fodder may then be provided on the partition between the feeding area 2 and the areas 4 - 7.

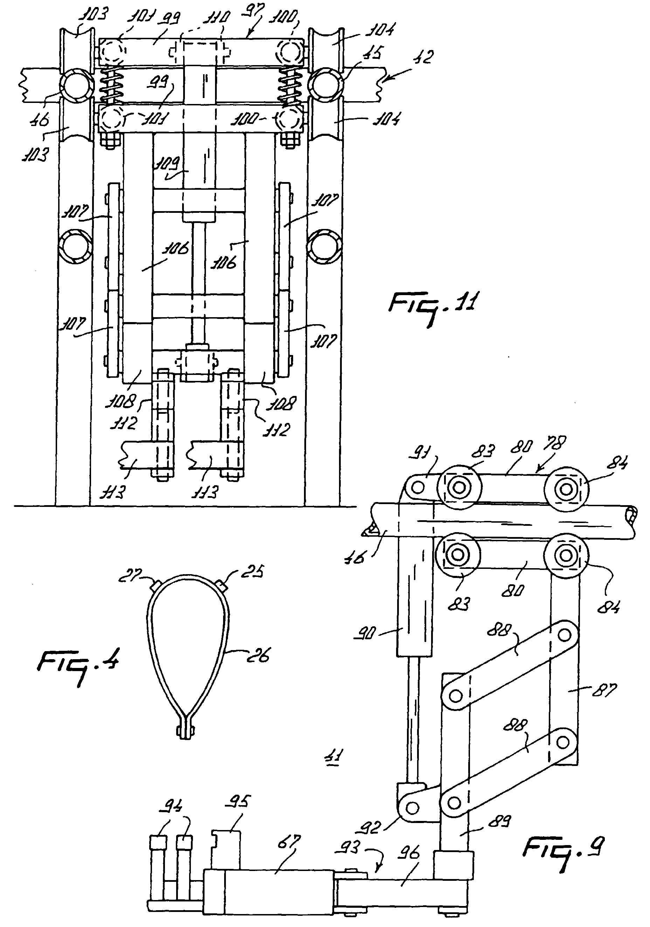

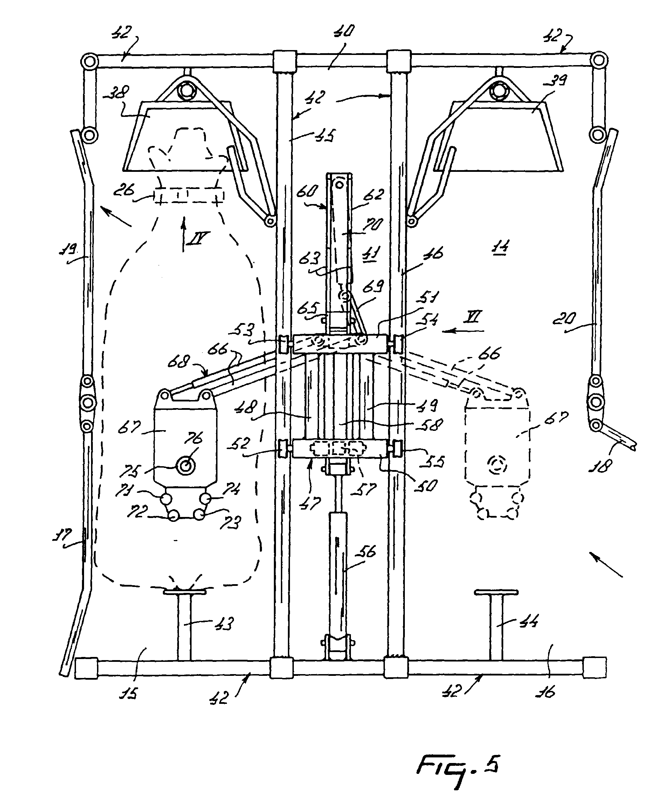

In order to realize a desired distribution of the total number of animals present in the shed over the areas 4 - 7, it should first be determined how many animals are present in each area at a given moment. This can be effected by providing each one of the doors 8 - 12, which open in one direction, with a counting device for counting the animals which move from one area to another through a relevant door. The counting devices may be connected to a computer, in which the number of animals in a given area can permanently be updated. When at a given instant too many animals are present in a given area in proportion to the number of animals in the other areas, then steps can be taken to effect that animals go from this one area to the next area. This can be achieved by ensuring that the computer keeps the relevant doors open for such a long period of time as necessary for a number of animals in the area in front of these doors to go to the next area through the doors. When the computer has ascertained that a given number of animals have moved from one area to another, as a result of which the overall number of animals in the first area has decreased to such an extent that the number corresponds to the normally desired number in such an area, the doors can again be closed under the control of the computer. Instead of, or optionally in addition to, the system of computer-controlled doors, use can alternatively be made of a radio system 25 having an aerial and a loudspeaker, which system is attached to animals. This radio system then operates in such a manner that, if too many animals are present in a given location, animals are encouraged by sound from the loudspeaker to go in one direction through the shed from one area to another. The radio system 25 can be attached to a collar 26 which the animals are wearing already, since such a collar is used as a carrier for the electronics of a cow identification system 27. Such a collar 26 is shown in Figure 4 and can consequently also function as a carrier for the electronics, including a loudspeaker and an aerial, relevant to the radio system 25. The aerial is preferably incorporated in its totality in the collar 26 itself.

Figure 2 again shows the shed 1, the difference being that now a pasture 28 is adjacent to the shed 1. In its longitudinal direction, the pasture 28 is provided for the major part with a railing, fence or a suchlike enclosure means 29 and in the transverse direction with a partition 30 which includes doors 31 and 32 which open in one direction. The pasture gives access to the shed 1 via doors 33 and 34 which open in one direction. From the area 4 the animals can pass through the doors 9 to the area 5 and from there via the doors 33 to the sub-pasture 35, via the doors 32 to the sub-pasture 36, via the doors 31 to the sub-pasture 37, via the doors 34 to the area 6, via the doors 11 to the area 7, via the doors 12 to the area 13, in which the milking box 14 is set-up, and from there via the doors 8 again to the area 4. Also in this situation, the animals can consequently pass through the shed and the pasture in only one direction.

The shed may be suitable for the accommodation of approximately sixty cows, which are milked three times a day. Between the consecutive milking runs, the animals have a period of rest in the shed and/or the pasture and a grazing period in the pasture of approximately seven hours, it being assumed that approximately one hour is needed for walking from the area or sub-pasture, in which an animal is present, to the area 13, in which the milking box 14 is positioned, for the period of time an animal has to wait before being allowed to enter the milking box 14, for cleaning and for the milking operation proper and for returning to the relevant area in the shed or to the relevant sub-pasture. The milking operation itself of the individual animals may take six to eight minutes.

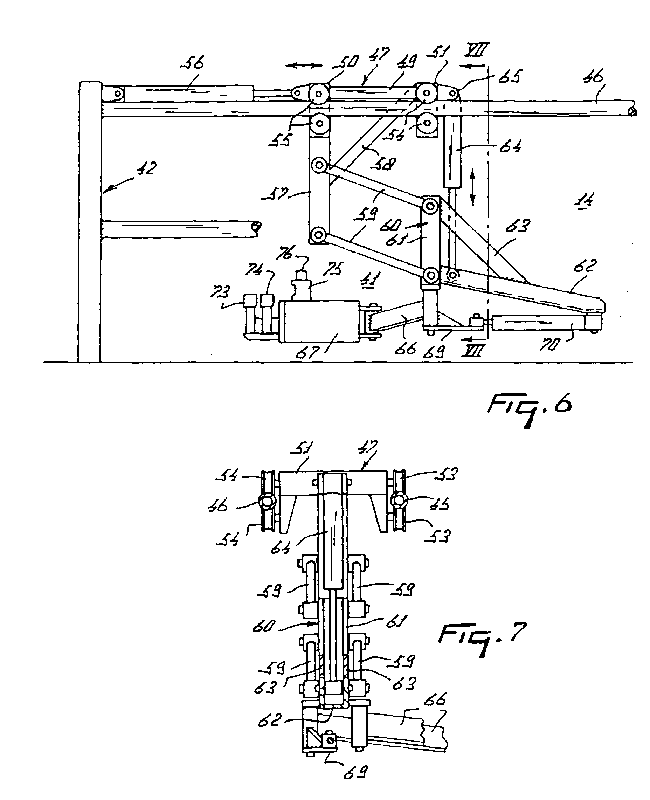

The milking box 14, such as it is illustrated in Figure 5, is designed as a dual box, i.e. as a milking box which comprises two adjacently arranged milking box compartments 15 and 16. Access to these compartments is obtained via the doors 17 and 18, whilst the animals can be guided from the compartments through the doors 19 and 20. Each of the compartments has an automatic feeding implement, of which the feeder troughs 38 and 39 are shown in Figure 5. By means of the feeding implement, an animal present in a milking box compartment can be provided with an appropriate quantity of fodder during milking. Between the two compartments 15 and 16 there is an intermediate space 40, in which a computer-controlled milking robot 41 is positioned. The computer itself is not further shown. The two compartments 15 and 16 are of such a design that they are each other's mirror image. The two compartments are assembled from a rail system 42, in which the two longitudinal sides of the two compartments are provided with the doors 17 - 20 mentioned before. In addition, the compartments 15 and 16 have means 43 and 44, respectively, which are shown only very schematically in Figure 5, which have for their object to move and keep the animals to be milked to and in a somewhat strictly defined position in the milking box.

The milking robot 41 includes a frame 47 which is movable along two rails 45 and 46 which form part of the rail system 42. This frame 47 is formed from cross-girders 50 and 51 which are interconnected by two beams 48 and 49 and at their two ends are provided with roller pairs 52 - 55, the frame 47 being movable with the aid of these roller pairs in the longitudinal direction over the rails 45 and 46 moving between the two compartments 15 and 16. The frame 47 can be moved over the rails 45 and 46 by means of a first operating cylinder 56 which has one side connected to the rearmost portion of the rail system 42 and its other side to the cross-girder 50 of the frame 47. In the midway point of the cross-girder 50 there is, rigidly connected to this cross-girder, a downwardly extending beam 57. This beam 57 is supported by a strut 58 arranged between the beam 57 and the cross-girder 51. A carrier 60 is connected to the lower end of the beam 57, via a first parallelogram structure 59 which is operative in a predominantly vertical plane. This carrier 60 includes a beam 61 which extends parallel to the beam 57, a rearwardly and slightly downwardly directed beam 62 and a strut 63 disposed between the beams 61 and 62. The carrier 60 can be moved up and down parallel to the beam 57 by means of a second operating cylinder 64 arranged between a lug 65 connected to the cross-girder 51 and the beam 62 of the carrier 60. Connected to the bottom side of the carrier 60, and more specifically to the bottom side of the beam 61 thereof, via a second parallelogram structure 66 which is operative in a predominantly horizontal plane, there is a robot head 67. Since the leading and trailing points of rotation of this second parallelogram structure are located on an imaginary horizontal axis in the transverse direction of the two compartments 15 and 16, a pivotal motion can be effected with the aid of this second parallelogram structure 66, by means of which the robot head 67 can be moved from one compartment to the other compartment and can then assume a substantially identical position in both compartments. By implementing one of the two connecting elements of the second parallelogram structure 66 as a (third) operating cylinder 68, the parallelogram formed by the parallelogram structure 66 can be slightly moved, whereby a rotation of the robot head 67 about an upwardly directed shaft relative to the frame 47 of the milking robot 41 can be obtained. One of the rods of the second parallelogram structure 66 is provided with a lever arm 69 arranged at a square angle thereto. Arranged between the free end of this lever arm 69 and the leading end of the beam 62 of the carrier 60 there is a fourth operating cylinder 70, with the aid of which the pivotal motion of the robot head 67 can be realized. Because of the movability of the milking robot 41 in the longitudinal direction between the two compartments 15 and 16 with the aid of the first operating cylinder 56, the capability of moving up and down of the carrier 60 with the aid of the second operating cylinder 64, the pivotability of the robot head 67 from one compartment to the other with the aid of the fourth cylinder 70 and the rotatability of the robot head 67 about an upwardly directed shaft with the aid of the third operating cylinder 68, a virtually optimum combination of motional features is created, which renders it possible to move the robot head 67 in any desired position to under the udder of an animal to be milked. The robot head 67 acts as a carrier for four teat cups 71 - 74, whilst the carrier supports a laser unit 75 for determining the position of the teats of an animal present in a milking box compartment. In order to control the robot head 67 in such a manner that it can be moved to under the animal's udder without touching the animal's legs, the construction is provided with one or a plurality of sensors for determining the distance of the robot head 67 to one or more legs of an animal standing in a milking box compartment. Such a sensor, or such sensors, is/are preferably disposed on the robot head 67 itself. In the present embodiment, there is only one such sensor, which is designed as a laser telemeter 76 and is positioned on the said laser unit 75. Since the laser unit 75 for determining the position of the teats of an animal present in a milking box compartment is arranged such as to be capable of rotation, as is extensively described in the European patent application No. 0 360 354, the motor employed for rotating this laser unit 75 can also be used for rotating the laser telemeter 76, so that only one such laser telemeter is sufficient. With the aid of the signals supplied by the laser telemeter 76, the operating cylinders 56, 64, 68 and 70 can now be controlled in such a manner via the computer that the robot head 67 can be moved from a rest position between the compartments 15 and 16, i.e. from a rest position in the intermediate space 40, to under the animal's udder without touching the legs of the animal standing in a milking box compartment, whereafter, by means of the laser unit 75, the position of the animal's teats can accurately be determined and the robot head 67 can be moved such that the teat cups can be connected to the teats of the animal by an upward motion. When an animal in compartment 15 has been milked, an animal to be milked thereafter is given the opportunity to enter compartment 16. After the animal has entered compartment 16, the door 18 of this compartment can be closed and, as soon as the animal present in compartment 15 has been milked, the robot head 67 can be pivoted from compartment 15 to under the udder of the animal standing in compartment 16 and the teat cups can then be connected to the teats of the animal then present in compartment 16. The other animal which has already been milked can then leave compartment 15 through the door 19 and the compartment is then empty, so that a further animal to be milked can enter compartment 15 through the door 17.

Although this is not of immediate importance for the present invention, it will be obvious that the teat cups, before they are connected to the teats of a subsequent animal, can be cleaned prior thereto. This might by done by pivoting the robot head 67 from one compartment to the intermediate space 40, by connecting the teat cups in this intermediate space to a cleaning unit, and, after the teat cups have been cleaned, by continued pivoting of the robot head 67 to the other compartment.

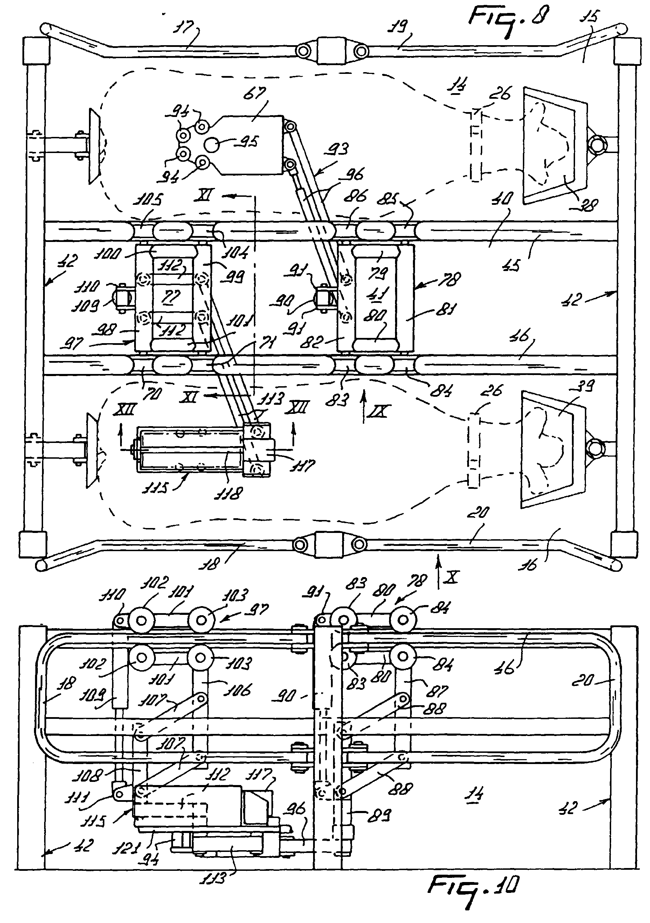

In Figures 8 - 13 a milking box with two compartments is shown, wherein besides a milking robot there is provided a cleaning member for the teats of an animal to be milked. Therefore, between the compartments 15 and 16, in the intermediate space 40, there is arranged in the rest position besides the milking robot 41 a cleaning member 77. In the embodiment shown, the milking robot 41 includes a frame 78 which is movable over two rails 45 and 46 which form part of the rail system 42 of the two compartments. This frame 78 is formed by cross-beams 81 and 82 which are interconnected by beams 79 and 80 and at their two ends are fitted with pairs of rollers 83 - 86. Using these roller pairs, the frame 78 can be moved in the longitudinal direction, passing between the two milking box compartments 15 and 16, over the rails 45 and 46. This motion can, for example, be realized with the aid of an operating cylinder, which has one side connected to the leading portion of the rail system 42 and its other end to a cross-beam 81 of the frame 78. This cylinder is, however, not shown in the drawings. In the midway point of the lower cross-beam 81, downwardly extending beams 87 are present which are rigidly connected to this cross-beam. Connected to the lower end of the beams 87 there are carriers 89 with the aid of a parallelogram structure 88 which operates in a predominantly verticale plane. The carriers 89 can be moved up and down parallel to the beams 87 by means of an operating cylinder 90 arranged between lugs 91 connected to the upper cross-beam 82 and lugs 92 present on a beam between the carriers 89. At the lower side of the beams 89 there is a robot arm structure 93 with teat cups 94 and a sensor 95 for determining the position of the teats of an animal present in one of the compartments relative to the end of the robot arm structure 93, as there the teat cups 94 are located. The end of the robot arm structure 93 with the teat cups 94 is movable in a horizontal plane in the manner described hereinafter, whereas the robot arm structure 93 is movable in the vertical direction by means of the cylinder 90. The robot arm structure 93 includes a parallelogram structure 96 which is pivotably connected to the carriers 89. One of the arms of this parallelogram structure includes an operating cylinder. As a result of the movement of the frame 78 over the rails 45 and 46, the pivotal motion to be performed with the aid of the parallelogram structure 96 and the rotational capability of the end of the robot arm structure 93 with the aid of the operating cylinder associated with the parallelogram structure 96, the teat cups 94 can be moved in any position to under the udder of an animal present in a compartment. The milking robot 41 is of such a design that the frame 78 is movable over the leading portion of the rails 45 and 46, whilst furthermore the parallelogram structure 96 is directed rearwardly, so that the end of the robot arm structure can be pivoted through between a front leg and a hind leg and can therafter be moved to under the udder of the animal, more in particular in a position determined with the aid of the sensor 95.

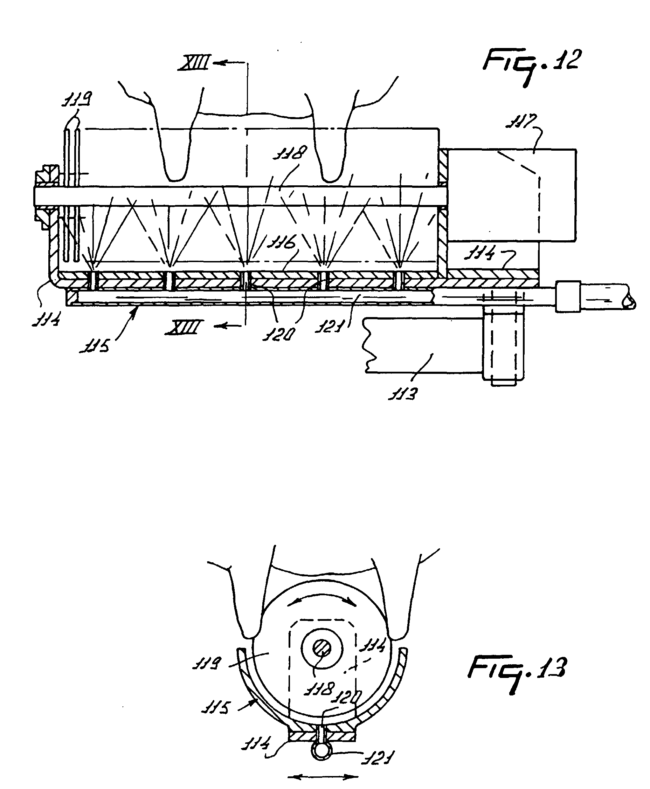

As has already been mentioned in the foregoing, not only the milking robot 41 but also the cleaning member 77 is set-up in the intermediate space 40. In the embodiment shown, the cleaning member 77 includes a frame 97 which is movable over the rails 45 and 46. This frame 97 is formed from cross-beams 98 and 99 which are interconnected by beams 100 and 101 and at their two ends are provided with pairs of rollers 102 - 105. By means of these pairs of rollers, the frame 97 can be moved in the longitudinal direction through between the two milk box compartments 15 and 16 over the rails 45 and 46. This motion can, for example, be realized with the aid of an operating cylinder, which has one side connected to the rearmost portion of the rail system 42 and the other side to a cross-beam 98 of the frame 97. This cylinder is, however, not shown in the drawings. In the midway point of the lower cross-beam 99, downwardly extending beams 106 are present which are rigidly connected to this cross-beam. Connected to the lower end of the beams 106, with the aid of a parallelogram structure 107 which is operative in a predominantly vertical plane, there are carriers 108. The carriers 108 can be moved up and down parallel to the beams 106 with the aid of an operating cylinder 109, which is disposed between lugs 110 connected to the upper cross-beam 98 and lugs 111 connected to a beam between the carriers 108. Attached to the bottom side of the carriers 108 there is a double parallelogram structure which is formed by a first parallelogram structure 112 and a second parallelogram structure 113. A carrier 114 (see Figure 12), on which the component parts of a cleaning element 115 are disposed, is present at the end of the second parallelogram structure 113. By means of the second parallelogram structure 113, the cleaning element 115 can be pivoted from the intermediate space 40 to under the udder of an animal located in one of the compartments 15 or 16. By means of the first parallelogram structure 112, the second parallelogram structure 113 and in conjunction therewith the cleaning element 115 can be moved to and fro in a direction transversely to the longitudinal direction of a compartment. This motion renders it possible to reciprocate the cleaning member under the udder and thereby to increase the cleaning effect.

The cleaning member 115 comprises a container 116 which extends in the longitudinal direction of a compartment and a rod-like element 118 which is bearing-supported in the side walls of the container, and which is drivable by means of a motor 117 and is provided with textile discs 119. The rod-like element 118 with the textile discs 119 is rotatable by means of the motor 117 relative to the longitudinal direction of a milking box compartment. The textile discs 119 can rotate in two directions and during this rotary motion can be moved, under the udder of an animal. The container 116 does not only function as a carrier for the rotatable textile discs 119, but also as a water receptacle and is provided at its bottom side with a plurality of apertures 120 which are arranged in a row. A water supply line 121 is located at the bottom side of the water receptacle. Through this supply line, water can be sprayed into the water receptacle 116, in order to clean the teats of an animal.

The present invention is not limited to the embodiments described in the foregoing, but also relates to all kinds of modifications thereof, in sofar they are within the scope of the following claims. Alternatively more than two milking box compartments may be used. These compartments can, for example, be arranged in two rows.

## Claims

1. A construction for automatically milking animals, such as cows, comprising a milking box (14) with a milking robot (41) and at least two enclosed areas where the animals can freely move about, which construction includes a system of doors, gates or suchlike means (8 - 12) which open in one direction for defining the path and the direction in which the animals can walk to and from the milking box (14), and in that the areas are connected successively to each other while the milking box (14) is arranged between two successive areas, and the system of doors, gates or suchlike means (8 - 12) are arranged in such a way that an animal can walk from a first area of the successive areas to a second area of the successive areas via the milking box (14), characterized in that the animal can walk from said second area, via at least one other successively connected enclosed area, to said first area.

2. A construction as claimed in claim 1, characterized in that an area (1, 28) comprises a pasture and a shed with cubicles for the animals, the shed furthermore being arranged such that the animals can optionally stay in a pasture adjacent to the shed or in the cubicles.

3. A construction as claimed in claim 2, characterized in that the animals can pass through the shed (1) and the pasture (28) in one direction only.

4. A construction as claimed in claim 2 or 3, characterized in that the shed (1), and optionally the pasture (28), is provided with dual doors or gates (8 - 12) which open in one and the same direction.

5. A construction as claimed in any one of claims 1, 2 or 4, characterized in that the doors or gates (8 - 12) include a counting device.

6. A construction as claimed in claim 5, characterized in that a computer is present which determines the number of animals in an area between two doors or gates (8 - 12) which are arranged consecutively in the path and open in one and the same direction, with the aid of which computer a higher or lower number of animals is allowed to enter such an area by closing a door or gate or by leaving same open.

7. A construction as claimed in any one of the preceding claims 2-6, characterized in that, by means of the system of doors or gates (8 - 12) which open in only one direction, the animals pass through the shed (1) and optionally the pasture (28) in one and the same direction three times a day.

8. A construction as claimed in any one of the preceding claims 2-6, characterized in that a radio system (25) with aerial and loudspeaker is attached to an animal, which operates in such a manner that, if there are too many animals in a location, animals are encouraged by sounds from the loudspeaker to move in one direction through the shed (1) and optionally a pasture (28) contiguous thereto to the milking robot (41).

9. A construction as claimed in claim 9 or 10, characterized in that the radio system (25) is part of a collar (26) of the animal.

## Patentansprüche

1. Vorrichtung zum automatischen Melken von Tieren, wie z. B. Kühen, die eine Melkbox (14) mit einem Melkroboter (41) und mindestens zwei umschlossene Bereiche aufweist, wo sich die Tiere frei bewegen können, wobei die Vorrichtung ein System von Türen, Toren oder ähnlichen Vorrichtungen (8 bis 12) aufweist, die sich in einer Richtung öffnen, so daß der Weg und die Richtung festgelegt sind, auf dem bzw. in der die Tiere zu der Melkbox (14) hin- und von ihr weggehen können, und wobei die Bereiche aufeinanderfolgend angeordnet sind und die Melkbox (14) zwischen zwei aufeinanderfolgenden Bereichen angeordnet ist, und wobei das System von Türen, Toren oder ähnlichen Vorrichtungen (8 bis 12) derart angeordnet ist, daß ein Tier aus einem ersten Bereich der aufeinanderfolgenden Bereiche über die Melkbox (14) in einen zweiten Bereich der aufeinanderfolgenden Bereiche gehen kann,
dadurch gekennzeichnet, daß das Tier aus dem zweiten Bereich über mindestens einen anderen darauffolgend angeordneten umschlossenen Bereich in den ersten Bereich gehen kann.

2. Vorrichtung nach Anspruch 1,
dadurch gekennzeichnet, daß ein Bereich (1, 28) eine Weide und einen Stall mit Boxen für die Tiere umfaßt, wobei der Stall ferner derart angeordnet ist, daß sich die Tiere wahlweise auf einer Weide neben dem Stall oder in den Boxen aufhalten können.

3. Vorrichtung nach Anspruch 2,
dadurch gekennzeichnet, daß die Tiere den Stall (1) und die Weide (28) nur in einer Richtung durchlaufen können.

4. Vorrichtung nach Anspruch 2 oder 3,
dadurch gekennzeichnet, daß der Stall (1) und wahlweise die Weide (28) mit zweiflügeligen Türen oder Toren (8 bis 12) versehen ist, die sich in ein und derselben Richtung öffnen.

5. Vorrichtung nach einem der Ansprüche 1, 2 oder 4,
dadurch gekennzeichnet, daß die Türen oder Tore (8 bis 12) eine Zählvorrichtung aufweisen.

6. Vorrichtung nach Anspruch 5,
dadurch gekennzeichnet, daß ein Computer vorhanden ist, der die Anzahl von Tieren in einem Bereich zwischen zwei Türen oder Toren (8 bis 12) ermittelt, die auf dem Weg nacheinander angeordnet sind und sich in ein und derselben Richtung öffnen, wobei mit Hilfe des Computers durch Schließen einer Tür oder eines Tores oder durch Offenlassen derselben eine größere oder kleinere Anzahl von Tieren in einen solchen Bereich eingelassen wird.

7. Vorrichtung nach einem der vorhergehenden Ansprüche 2 bis 6,
dadurch gekennzeichnet, daß die Tiere mit Hilfe des Systems von sich nur in einer Richtung öffnenden Türen oder Toren (8 bis 12) den Stall (1) und wahlweise die Weide (28) dreimal pro Tag in ein und derselben Richtung durchlaufen.

8. Vorrichtung nach einem der vorhergehenden Ansprüche 2 bis 6,
dadurch gekennzeichnet, daß an einem Tier ein Funksystem (25) mit Antenne und Lautsprecher angebracht ist, das derart arbeitet, daß Tiere durch Töne aus dem Lautsprecher dazu gebracht werden, in einer Richtung durch den Stall (1) und wahlweise durch eine daran angrenzende Weide (28) zum Melkroboter (41) zu gehen, wenn sich zu viele Tiere an einem Ort aufhalten.

9. Vorrichtung nach Anspruch 9 oder 10,
dadurch gekennzeichnet, daß das Funksystem (25) Teil eines Halsbandes (26) des Tieres ist.

## Revendications

1. Installation de traite automatique d'animaux, tels que des vaches, comportant un box de traite (14) ayant un robot de traite (41) et au moins deux zones clôturées autour desquelles les animaux peuvent se déplacer librement, laquelle installation comporte un système de portes, de barrières ou moyens analogues (8 à 12), qui s'ouvrent dans une direction pour définir le trajet et la direction dans laquelle les animaux peuvent marcher jusqu'au box de traite (14) et à partir de celui-ci, et en ce que les zones sont reliées de manière successive les unes aux autres alors que le box de traite (14) est agencé entre deux zones successives, et le système de portes, de barrières ou moyens analogues (8 à 12) est agencé de manière telle qu'un animal peut marcher à partir d'une première zone des zones successives jusqu'à une deuxième des zones successives via le box de traite (14), caractérisée en ce que l'animal peut marcher à partir de ladite deuxième zone via au moins une autre zone clôturée reliée successivement, jusqu'à ladite première zone.

2. Installation selon la revendication 1, caractérisée en ce qu'une zone (1, 28) comporte un pré et un hangar ayant des compartiments cloisonnés destinés aux animaux, le hangar étant de plus agencé de manière telle que les animaux peuvent facultativement rester dans un pré adjacent au hangar ou dans les compartiments cloisonnés.

3. Installation selon la revendication 2, caractérisée en ce que les animaux peuvent passer à travers le hangar (1) et le pré (28) dans une seule direction.

4. Installation selon la revendication 2 ou 3, caractérisée en ce que le hangar (1), et facultativement le pré (28), sont munis de portes ou de barrières doubles (8 à 12) qui s'ouvrent dans une seule et même direction.

5. Installation selon l'une quelconque des revendications 1, 2 ou 4, caractérisée en ce que les portes ou les barrières (8 à 12) comportent un dispositif de comptage.

6. Installation selon la revendication 5, caractérisée en ce qu'un ordinateur est présent qui détermine le nombre d'animaux présents dans une zone située entre deux portes ou deux barrières (8 à 12) qui sont agencées consécutivement dans le trajet et ouvertes dans une seule et même direction, ordinateur à l'aide duquel un nombre plus important ou moins important d'animaux peut entrer dans une telle zone, en fermant une porte ou une barrière ou en laissant celles-ci ouvertes.

7. Installation selon l'une quelconque des revendications précédentes 2 à 6, caractérisée en ce que, par l'intermédiaire du système de portes ou barrières (8 à 12), qui s'ouvrent dans une seule direction, l'animal passe à travers le hangar (1) et facultativement à travers le pré (28) dans une seule et même direction trois fois par jour.

8. Installation selon l'une quelconque des revendications précédentes 2 à 6, caractérisée en ce qu'un système radio (25) ayant une antenne et un haut-parleur est fixé à un animal, qui fonctionne d'une manière telle que, s'il y a trop d'animaux présents à un endroit, des animaux sont encouragés par des sons provenant du haut-parleur à se déplacer dans une direction à travers le hangar (1) et facultativement à travers un pré (28) contigu à celui-ci jusqu'au robot de traite (41).

9. Installation selon la revendication 8, caractérisée en ce que le système radio (25) est une partie d'un collier (26) de l'animal.
